# EUROPÄISCHE PATENTSCHRIFT

(11) **EP 2 014 059 B1**
(45) Veröffentlichungstag und Bekanntmachung des Hinweises auf die Patenterteilung: **16.09.2009**
(21) Anmeldenummer: 07727776.2
(22) Anmeldetag: 04.04.2007
(51) Int. Cl.: H04L 29/08

(54) **VERFAHREN ZUM INSTALLIEREN EINES DRAHTLOS KOMMUNIZIERENDEN INSTALLATIONSSYSTEMS AUS SENSOREN UND AKTOREN**
METHOD FOR INSTALLING A WIRELESSLY COMMUNICATING INSTALLATION SYSTEM FROM SENSORS AND ACTUATORS
PROCÉDÉ POUR INSTALLER UN SYSTÈME D'INSTALLATION À COMMUNICATION SANS FIL CONSTITUÉ DE CAPTEURS ET D'ACTIONNEURS

(30) Priorität: 02.05.2006 DE 102006020124
(43) Veröffentlichungstag der Anmeldung: 14.01.2009
(73) Patentinhaber: SIEMENS AKTIENGESELLSCHAFT, 80333 München (DE)
(72) Erfinder: BREHM, Norbert, 93083 Obertraubling (DE); DIETZ, Martin, 93105 Tegernheim (DE)
(86) Internationale Anmeldenummer: PCT/EP2007/053305
(87) Internationale Veröffentlichungsnummer: WO 2007/125006

(56) Entgegenhaltungen:
- EP-A2- 0 346 614
- WO-A-20/05038738
- WO-A-20/05125155
- US-A1- 2005 269 394

## Beschreibung

Die Erfindung betrifft ein Verfahren zum Installieren eines drahtlos kommunizierenden Installationssystems aus Sensoren und Aktoren, zu dem ein bereits installiertes Installationssystem existiert, in dem die Sensoren und Aktoren gleich angeordnet sind. Unter "gleich angeordnet" wird hier verstanden, dass den Sensoren und Aktoren eine gleiche Anordnungsortsbezeichnung zugeordnet werden kann, nach Art von "an der Tür 1", "rechts neben dem Fenster 2", oder auch nur "im Wohnzimmer". Die gleiche Anordnung beinhaltet lediglich, dass die Sensoren und Aktoren in gleicher Anzahl bereitgestellt sind, gleichartig gebaut sind und demzufolge dieselben Funktionen einnehmen. Die Gleichartigkeit kann so weit gehen, dass das eine, noch zu installierende Installationssystem, in einer baugleichen Wohnung wie das drahtlos kommunizierende Installationssystem angeordnet ist. Insbesondere in Hochhäusern mit einer Vielzahl von in verschiedenen Stockwerken aufeinander folgenden Wohnungen sind die einzelnen Wohnungen häufig vom Grundschritt und damit von dem elektrischen Installationssystem her gleich.

Im Rahmen einer Installation wird eine Beziehung von den Aktoren zu den Sensoren festgelegt. Üblicherweise erfolgt dies von der Aktorenseite her: In den Aktoren sind Tabellen mit Adressen von Sensoren abgelegt. Die Sensoren geben bei Abgabe von Signalen ihre eigene Adresse mit ab. Die Aktoren erkennen dann, dass sie möglicherweise auf die Signale ansprechen müssen.

Jeder individuelle Sensor hat eine eigene Adresse. Daher fönnen die Tabellen eines bestehenden Installationssystems nicht einfach auf ein neues Installationssystem übertragen werden.

Im Stand der Technik werden aus diesem Grund die vollständigen Installationen für sämtliche Installationssysteme, auch wenn diese anordnungsgleich sind, jedes Mal wiederholt.

Die WO 2005/125155 A1 offenbart ein Steuersystem für ein Gebäude, in dem Sensoren und Aktoren in einer Mehrzahl von Sensornetzwerken verwendet werden. Anstatt die Sensornetzwerke von einer zentralen Steuerung direkt anzusteuern, werden Berechnungsknoten verwendet, denen einzelne Funktionen zugeordnet sind. Diesen Funktionen wiederum können Raumtypen zugeordnet werden, wobei eine Mehrzahl von Raumtypen ein und demselben Berechnungsknoten zugeordnet werden kann. Beispielsweise kann ein Berechnungsknoten bewirken, dass wenn ein Metallerfassungssensor Metall (eine Waffe) erfasst, eine Tür geschossen wird. Dies kann beispielsweise in einer Eingangshalle eingesetzt werden.

Es ist Aufgabe der Erfindung, ein Verfahren zum Installieren gemäß der eingangs genannten Art bereitzustellen, das die Situation vereinfacht.

Die Aufgabe wird durch ein Verfahren gemäß Patentanspruch 1 gelöst.

Das Verfahren umfasst erfindungsgemäß also die folgenden Schritte:
a) Erfassen zumindest der Sensoradressen des bereits installierten Installationssystems sowie der in der Aktoren abgelegten Tabellen durch ein Kommunikationsgerät,
b) Zuordnen jeweils einer Sensoranordnungsortsbezeichnung zu jeder Sensoradresse und damit zu jedem Sensor in dem Kommunikationsgerät,
c) Zuordnet jeweils einer Aktorenanordnungsortsbezeichnung zu jeder Tabelle eines Aktors und damit zu jedem Aktor in dem Kommünikationsgerät,
d) zu jeder Sensoranordnungsortsbezeichnung:
   d1) Suchen eines Sensors mit einem der Bezeichnung entsprechenden Anordnungsort in dem zu installierenden Installationssystem,
   d2) Erfassen von dessen Sensoradresse,
e) zu jeder Aktorenanordnungsortsbezeichnung:
   e1) Erzeugen einer neuen Tabelle durch Ersetzen der bisherigen Sensoradressen in der Tabelle, die der Aktorenanordnungsortsbezeichnung zugeordnet ist, durch die derselben Sensoranordnungsortsbezeichnung wie die bisherigen Sensoradressen zugeordneten Sensoradressen des zu installierenden Installationssystems,
   e2) Suchen eines Aktors mit dem der Bezeichnung entsprechenden Anordnungsort in dem zu installierenden Installationssystem,
   e3) Überspielen der neuen Tabelle auf den Aktor.

Die Erfindung beruht auf der Erkenntnis, dass man den einzelnen, von Installationssystem zu Installationssystem variablen Adressen, eine Anordnungsortsbezeichnung zuordnen kann, die für eine Mehrzahl von Installationssystemen gültig ist. Die erfassten Daten werden damit gewissermaßen in Daten für die Anordnungsortsbezeichnung übersetzt. Die Tabellen mit Adressdaten von Sensoren werden damit in verallgemeinerter Form behandelt. Anstatt die Tabellen so zu interpretieren, dass der Aktor mit der Adresse 0010 auf die Signale der Sensoren mit den Adressen 0001 und 0002 zu achten hat, interpretiert man die Tabelle so, dass der Jalousieaktor die Daten des Temperatursensors und des Jalousieschalters erfasst.

Das Bereitstellen eines erfindungsgemäßen Verfahrens beruht bereits auf der Erkenntnis, dass anordnungsgleiche Installationssysteme ökonomisch installiert werden können, wenn formale Ähnlichkeiten, nämlich Ähnlichkeiten in der Anordnung gegeben sind. Die einzelnen Sensoren und Aktoren können dabei durchaus bauverschieden sein. Der jeweils konkrete Temperatursensor oder jeweils konkret verwendete Jalousieaktor kann von Installationssystem zu Installationssystem variieren.

Bei einer bevorzugten Ausführungsform werden in Schritt a) auch die Aktorenadressen des bereits installierten Installationssystems erfasst, wodurch die Zuordnung der Aktorenanordnungsortsbezeichnung zu den Tabellen erleichtert ist. Weiter bevorzugt werden dann auch die Aktorenadressen des zu installierenden Installationssystems erfasst und mit den neuen Tabellen in dem Kommunikationsgerät abgespeichert. Dann stehen auch sämtliche Informationen über das neu installierte Installationssystem in dem Kommunikationsgerät zur Verfügung.

Die Einführung des Kommunikationsgeräts ist ein Aspekt der Erfindung. Das Kommunikationsgerät muss naturgemäß drahtlos in dem Installationssystem empfangen und senden können. Ein Teil des Kommunikationsgeräts kann ein herkömmlicher Personalcomputer sein.

In dem Kommunikationssystem kann die neue Tabelle, bevor sie auf den jeweiligen Aktor überspielt wird, auch von einer Bedienperson von Hand geändert werden. Dies kann dann notwendig oder zumindest nützlich sein, wenn zwischen den beiden Installationssystemen, dem bereits installierten und dem noch zu installierenden, leichte Unterschiede bestehen, z. B. was die Art der einzelnen Sensoren und Aktoren betrifft.

Der Schritt a) erfolgt durch einfache Abfrage, wobei die Sensoren wie im Stand der Technik üblich dadurch ihre Adresse abgeben, dass sie aktiviert werden (Taster z. B. gedrückt werden) und die Tabellen durch das Kommunikationsgerät von den Aktoren abgefragt werden können. Auch der Schritt e3) erfolgt in einfacher Art und Weise nach Versetzen des jeweiligen Aktors in den Programmiermodus. Bei dieser bevorzugten Ausführungsform muss dann gegebenenfalls die Aktorenadresse bekannt sein und verwendet werden.

Nachfolgend wird das erfindungsgemäße Verfahren anhand einer bevorzugten Ausführungsform desselben beschrieben, die unter Bezug auf die Zeichnung erläutert wird, in der:
FIG 1 die ersten Schritte zum Erzeugen eines neuen Satzes von Adresstabellen im Rahmen der vorliegenden Erfindung veranschaulicht und
FIG 2 die Folgeschritte zum Erzeugen eines neuen Satzes von Adresstabellen im Rahmen der vorliegenden Erfindung veranschaulicht.

In einem Installationssystem werden die Verknüpfungen von Sensoren und Aktoren dadurch bereitgestellt, dass in jedem Aktor eine Adresstabelle mit Adressen derjenigen Sensoren gespeichert wird, auf die der jeweilige Aktor reagieren soll.

Die Erfindung geht davon aus, dass zwei so genannte Projekte zur Verfügung stehen. Ein Projekt entspricht einem Installationssystem, das einem räumlichen Objekt zugeordnet ist. Beispielsweise entspricht ein Projekt einem Installationssystem in einer vorbestimmten Wohnung. Die beiden Projekte, im Folgenden auch als Referenzprojekt und neues Projekt bezeichnet, sollen eine gleiche Anzahl von Sensoren und eine gleiche Anzahl von Aktoren aufweisen, und Sensoren und Aktoren sollen funktionsgleich sein. Die Funktionsgleichheit spiegelt sich in einer Anordnungsgleichheit wider, ist aber von einer Baugleichheit zu unterscheiden. Die Anordnungsgleichheit bedeutet, dass funktionsgleiche Sensoren an einander entsprechenden Anordnungsorten angebracht sein sollen. Gleiches gilt für die Aktoren.

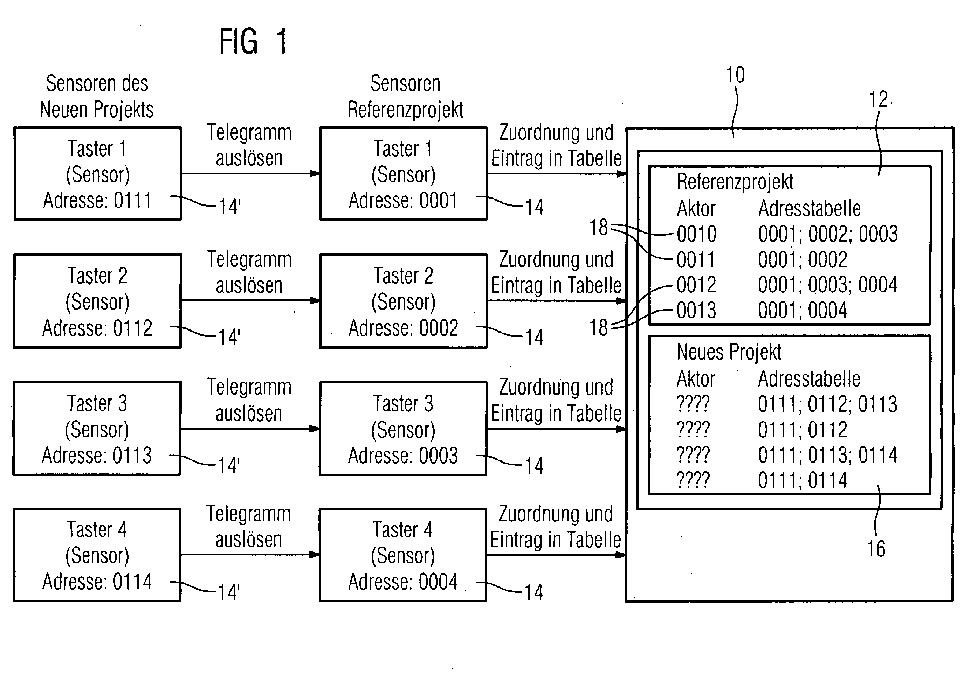

Das Referenzprojekt sei nun bereits installiert. Die Installation kann hierbei in an sich herkömmlicher Art und Weise erfolgt sein. Es sollen nun die Daten über das Referenzprojekt zur Verfügung gestellt sein. Hierbei steht in einem Kommunikationsgerät 10 ein Datensatz 12 für das Referenzprojekt zur Verfügung. Der Datensatz umfasst die Adressen der zu dem Referenzprojekt zugehörigen Aktoren (vorliegend 0010, 0011, 0012, 0013) und die zu den Aktoren zugehörigen Adresstabellen. Beispielsweise ist dem Aktor 0011 die Adresstabelle aus den Einträgen 0001 und 0002 zugeordnet, wobei die Adressen 0001 und 0002 für Sensoren 14 des Referenzprojekts stehen. Nicht dargestellt ist in der FIG 1 eine zu dem Datensatz 12 zugehörige Information: Jeder Sensoradresse wird eine Anordnungsortsbezeichnung zugeordnet, die den Ort des zu der Adresse zugehörigen Sensors wiedergibt oder sonstwie den Sensor von anderen Sensoren unterscheidbar definiert. Jedem Aktor und damit jeder Adresstabelle wird ebenfalls eine Anordnungsortsbezeichnung zugeordnet, die für den Ort steht, an dem sich der Aktor befindet.

Der Datensatz 12 kann auf herkömmliche Art und Weise ermittelt worden sein, es werden dann die einzelnen Sensoren 14 einzeln abgefragt und die einzelnen Aktoren (nicht gezeigt) ebenfalls einzeln abgefragt, und die Adresstabelle der Aktoren wird ausgelesen. Zur Erzeugung des Datensatzes 12 kann auch ein Verfahren eingesetzt werden, das in einer am gleichen Tag wie die vorliegende Anmeldung eingereichten Anmeldung mit dem Titel "Verfahren zum vollständigen Erfassen der Daten betreffend Verknüpfungen von Sensoren und Aktoren in einem drahtlos kommunizierenden Installationssystem" beschrieben ist. Da die Erfassung des Datensatzes 12 aber auch in an sich herkömmlicher Art und Weise möglich ist, soll sie hier nicht ausführlicher beschrieben werden.

Die Anordnungsortsbezeichnungen ermöglichen es, jedem Sensor 14 des Referenzprojekts einen Sensor 14' des neuen Projekts zuzuordnen. Den in FIG 1 gezeigten vier Sensoren 14 entsprechen daher vier Sensoren 14', jeweils mit anderer Anordnungsortsbezeichnung.

Eine solche Anordnungsortsbezeichnung sei beispielsweise der Begriff "Taster 1", "Taster 2", "Taster 3", oder "Taster 4". (Eine einfache Zählung von Tastern stellt die einfachste Art der Wiedergabe einer Anordnung dar.)

Es soll nun ein Datensatz 16 für das neue Projekt erzeugt werden. Hierzu müssen zunächst die Adressen der Sensoren 14' bekannt sein. In an sich herkömmlicher Art und Weise wird ein Telegramm ausgelöst. Ein Taster gibt im Rahmen eines Telegramms seine eigene Adresse (mit) ab. Die Adresse muss durch das Kommunikationsgerät 10 erfasst werden. Auf Grund der Zuordnung unter Verwendung der Anordnungsortsbezeichnung können dann in dem Datensatz 16 für das neue Projekt die Adresstabellen erzeugt werden. Die Adresstabellen sehen formal so aus wie die Adresstabellen in dem Datensatz 12, nur sind die entsprechenden Adressen aus dem Datensatz 12 der Sensoren 14 durch die Adressen der zugehörigen Sensoren 14' ersetzt. Beispielsweise ist in der Adresstabelle zum Aktor 0010 und in der Adresstabelle zum Aktor 0012 die Adresse 0003 für Taster 3 enthalten. Die Anordnungsortsbezeichnung "Taster 3" führt dazu, dass statt dieser Adresse nun dem ersten, noch unbekannten Aktor, die Adresse "0113" von Taster 3 des neuen Projekts zugeordnet wird, und dem dritten Aktor des neuen Projekts im Datensatz 16, der dem Aktor 0012 aus dem Datensatz 12 entspricht, wird ebenfalls die Adresse 0113 von Taster 3 zugeordnet. Wird dies für alle Sensoren 14' durchgeführt, erhält man eine komplett aktuelle Adresstabelle im Datensatz 16 für das neue Projekt. Bisher sind noch die Adressen der Aktoren im neuen Projekt unbekannt. Grundsätzlich ist die Verwendung dieser Adressen gar nicht vonnöten, sondern es würde genügen, wenn in dem Kommunikationsgerät 10 die Anordnungsortsbezeichnung für den Aktor bekannt ist..Die hier beschriebene Ausführungsform geht jedoch so weit, auch die Adressen der Aktoren zu erfassen.

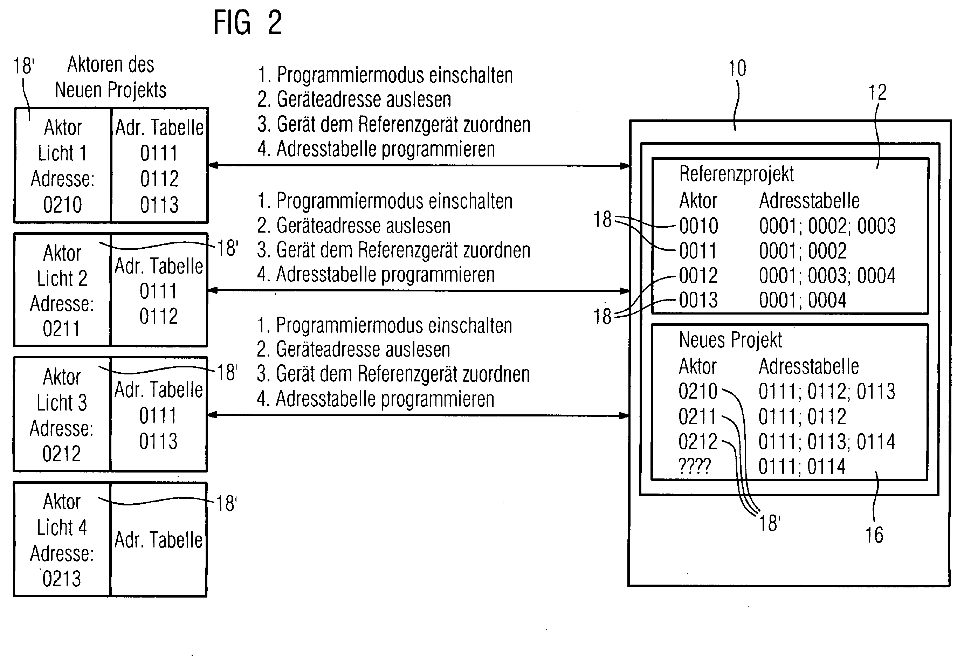

FIG 2 veranschaulicht die weiteren noch durchzuführenden Schritte: Während die (nicht gezeigten, nur in dem Datensatz 12 angegebenen) Aktoren des Referenzprojekts die Bezugszahl 18 tragen sollen, tragen die Aktoren des neuen Projekts die Bezugszahl 18'. Jeder Aktor trägt eine Anordnungsortsbezeichnung, vorliegend "Aktor Licht n" mit n = 1 - 4. Um nun den einzelnen Aktoren 18' die Adresstabellen aus dem Datensatz 16 zuordnen zu können, muss zunächst ein Programmiermodus der Aktoren 18' eingeschaltet werden. Anschließend wird die Geräteadresse der Aktoren ausgelesen und in den Datensatz 16 eingetragen. Gezeigt ist dies für die Aktoren "Aktor Licht 1", "Aktor Licht 2" und "Aktor Licht 3" mit den Adressen 0210, 0211 und 0212. Noch nicht durchgeführt wurden die Schritte für den Aktor "Aktor Licht 4". Auf Grund der Anordnungsortsbezeichnung "Aktor Licht n" erfolgt im Datensatz 16 die Zuordnung der Aktorenadressen zu der jeweiligen Adresstabelle. Auf diese Weise wird das Aktorgerät 18' des neuen Projekts dem Referenzgerät 18 aus dem Referenzprojekt zugeordnet. Es ist nunmehr klar, welche der Adresstabellen aus dem Datensatz 16 welche der drei ersten Aktoren zuzuordnen ist. Entsprechend wird im folgenden Schritt die Adresstabelle programmiert, d. h. mit anderen Worten von dem Kommunikationsgerät 10 auf die jeweiligen Aktoren 18' überspielt.

Das Verfahren, wie es in FIG 2 dargestellt ist, findet seine Fortsetzung durch Wiederholen derselben Schritte für den "Aktor Licht 4". Man erhält so vier verschiedene Aktoren 18' mit jeweils aktueller Adresstabelle, wobei die Adresstabelle auf Grund der Vorarbeit (FIG 1) die Adressen der Sensoren 14' des neuen Projekts enthält. Damit ist aber die Aufgabe erledigt, das neue Projekt zu installieren, denn allen Aktoren 18' sind Adresstabellen zugeordnet. Das erfindungsgemäße Verfahren kann, ist der Datensatz 12 für das Referenzprojekt einmal erstellt, beliebig oft bei neuen Projekten wiederholt werden. In der Folge kann naturgemäß auch der Datensatz 16 für das neue Projekt für ein noch neueres Projekt verwendet werden. Die Anordnungsortsbezeichnungen ("Taster", "Aktor Licht") bleiben gleich.

## Patentansprüche

1. Verfahren zum Installieren eines drahtlos kommunizierenden Installationssystems aus Sensoren (14') und Aktoren (18'), zu dem ein bereits installiertes Installationssystem existiert, in **dem** Sensoren (14) und Aktoren (18) **angeordnet** sind, wobei in den Aktoren des bereits installierten Installationssystems im Rahmen der Installation Tabellen mit Adressen von Sensoren abgelegt sind, **gekennzeichnet durch die Schritte:**
a) Erfassen zumindest der Sensoradressen des bereits installierten Installationssystems sowie der in den Aktoren abgelegten Tabellen **durch** ein Kommunikätionsgerät (10),
b) Zuordnen jeweils einer Sensoranordnungsortsbezeichnung zu jeder Sensoradresse und damit zu jedem Sensor in dem Kommunikationsgerät,
c) Zuordnen jeweils einer Aktorenanordnungsortsbezeichnung zu jeder Tabelle eines Aktors und damit zu jedem Aktor in dem Kommunikationsgerät,
d) zu jeder Sensoranordnungsortsbezeichnung:
d1) Suchen eines Sensors (14') mit dem der Bezeichnung entsprechenden Anordnungsort in dem zu installierenden Installationssystem,
d2) Erfassen von dessen Sensoradressen,
e) zu jeder Aktorenanordnungsortsbezeichnung:
e1) Erzeugen einer neuen Tabelle **durch** Ersetzen der bisherigen Sensoradressen in der der Aktorenanordnungsortsbezeichnung zugeordneten Tabelle **durch** die derselben Sensoranordnungsortsbezeichnung wie die bisherigen Sensoradressen zugeordneten Sensoradressen des zu installierenden Installationssystems,
e2) Suchen eines Aktors (18') mit dem der Bezeichnung entsprechenden Anordnungsort in dem zu installierenden Installationssystem,
e3) Überspielen der neuen Tabelle auf den Aktor.

2. Verfahren nach Anspruch 1, **dadurch gekennzeichnet, dass** in Schritt a) auch die Aktorenadressen des bereits installierten Installationssystems erfasst werden, und dass e4) auch die Aktorenadressen des zu installierenden Installationssystems erfasst und mit den neuen Tabellen in dem Kommunikationsgerät (10) abgespeichert werden.

3. Verfahren nach Anspruch 1 oder 2, **dadurch gekennzeichnet, dass** vor Schritt e3) die neue Tabelle von einer Bedienperson von Hand geändert wird.

## Claims

1. A method for installing a wirelessly communicating installation system comprising sensors (14') and actuators (18') for which an already installed installation system exists, in which sensors (14) and actuators (18) are arranged, whereby tables with addresses of sensors are stored in the actuators of the already installed installation system within the framework of installation, **characterised by** the following steps:
a) Detection by a communication device (10) of at least the sensor addresses of the already installed installation system as well as of the tables stored in the actuators,
b) Assigning a sensor arrangement location code in each case to each sensor address and thereby to each sensor in the communication device,
c) Assigning an actor arrangement location code in each case to each table of an actuator and thereby to each actuator in the communication device,
d) For each sensor arrangement location code:
d1) Searching for a sensor (14') with the arrangement location in accordance with the code in the installation system to be installed,
d2) Detection of its sensor address,
e) For each actuator arrangement location code:
e1) Creating a new table by replacing the previous sensor addresses in the table assigned to the actuator arrangement location code by sensor addresses assigned to the same sensor arrangement location code as the previous sensor addresses of the installation system to be installed,
e2) Searching for an actuator (18') with the arrangement location in the installation system to be installed corresponding to the code,
e3) Copying the new table to the actuator.

2. Method according to claim 1, **characterised in that,** in step a) the actuator addresses of the installation system already stored are also detected and that e4) also detects the actuator addresses of the installation system to be installed and stores them with the new tables in the communication device (10).

3. Method according to claim 1 or 2, **characterised in that,** before step e3), the new table is modified manually by an operator.

## Revendications

1. Procédé pour installer un système d'installation à communication sans fil de capteurs (14') et d'actionneurs (18'), par rapport auquel il existe un système d'installation déjà installé dans lequel sont arrangés des capteurs (14) et des actionneurs (18), des tables contenant des adresses de capteurs étant stockées, dans le cadre de l'installation, dans les actionneurs du système d'installation déjà installé, **caractérisé par** les étapes :
a) saisie au moins des adresses de capteurs du système d'installation déjà installé ainsi que des tables stockées dans les actionneurs par un appareil de communication (10),
b) affectation, à chaque fois, d'une désignation de lieu d'arrangement de capteur à chaque adresse de capteur et donc à chaque capteur dans l'appareil de communication,
c) affectation, à chaque fois, d'une désignation de lieu d'arrangement d'actionneur à chaque table d'un actionneur et donc à chaque actionneur dans l'appareil de communication,
d) pour chaque désignation de lieu d'arrangement de capteur :
d1) recherche d'un capteur (14') ayant le lieu d'arrangement correspondant à la désignation dans le système d'installation à installer,
d2) saisie de son adresse de capteur,
e) pour chaque désignation de lieu d'arrangement d'actionneur :
e1) génération d'une nouvelle table en remplaçant les adresses de capteurs existant jusqu'à présent dans la table associée à la désignation de lieu d'arrangement d'actionneur par les adresses de capteurs du système d'installation à installer, lesquelles adresses sont associées à la même désignation de lieu d'arrangement de capteur que les adresses de capteurs existant jusqu'à présent,
e2) recherche d'un actionneur (18') ayant le lieu d'arrangement correspondant à la désignation dans le système d'installation à installer,
e3) transfert de la nouvelle table à l'actionneur.

2. Procédé selon la revendication 1, **caractérisé en ce que,** dans l'étape a), les adresses d'actionneurs du système d'installation déjà installé sont également saisies et **en ce que**
e4) les adresses d'actionneurs du système d'installation à installer sont saisies elles aussi et enregistrées dans l'appareil de communication (10) avec les nouvelles tables.

3. Procédé selon la revendication 1 ou 2, **caractérisé en ce que**, avant l'étape e3), la nouvelle table est modifiée manuellement par un opérateur.
